# DEMANDE DE BREVET EUROPEEN

(11) **EP 2 610 793 A1**
(43) Date de publication de la demande: **03.07.2013**
(21) Numéro de dépôt: 11196245.2
(22) Date de dépôt: 30.12.2011
(51) Int. Cl.: G06Q 10/08

(54) **Procédé pour effectuer des inventaires et des valorisations actualisés d'objets tels que des équipements industriels ou des oeuvres d'art**

(71) Demandeur: Risks et Solutions, 25000 Besancon (FR)
(72) Inventeur: Deloche, Franck, 25000 Besançon (FR); Marti, Pierre, 25000 Besançon (FR)
(74) Mandataire: Cabinet Plasseraud

(57) **Abrégé**

La présente invention est relative au domaine de la gestion assistée par ordinateur de parcs de biens qui peuvent être des équipements industriels (machines-bâtiments) ou des oeuvres d'art par exemple. Plus précisément, l'invention concerne la réalisation d'inventaires et de valorisations actualisés de parcs d'objets tels que des équipements industriels (machines-bâtiments) ou des oeuvres d'art.

Le procédé consiste à mettre en oeuvre un serveur informatique (1) ; une base de données (2) comprise dans le serveur (1); un réseau informatique (3) ; une pluralité de terminaux (4) permettant à des utilisateurs d'accéder à un ou plusieurs inventaires contenus dans la base de données (2); des moyens (5) d'acquisition de données sur les objets et sur leurs valeurs (V) réelles et individualisées et éventuellement sur leurs structures ; des moyens (6) d'enregistrement sur la base de données (2) des données acquises et comparées.

Il comprend les étapes suivantes :
(a) acquisition de données notamment à l'aide des moyens (5) :
(i) sur les objets ;
(ii) sur leurs valeurs(V) ;
(iii) et éventuellement sur leurs structures.

(b) enregistrement de ces données dans la base de données (2) sous la forme de fiches-objets correspondant aux objets inventoriés et référencées chacune par au moins un identifiant (Id); ledit enregistrement s'effectuant sous le contrôle d'un ou plusieurs administrateurs ;
(c) lecture et exploitation de la base de données (2) par les utilisateurs à l'aide du réseau (3) et des terminaux (4) ;
(d) actualisation de la base de données (2) par les administrateurs.

## Description

### Domaine technique

La présente invention est relative au domaine de la gestion assistée par ordinateur de parcs de biens qui peuvent être des équipements industriels (machines-bâtiments) ou des oeuvres d'art par exemple. Plus précisément, l'invention concerne la réalisation d'inventaires et de valorisations actualisés de parcs d'objets tels que des équipements industriels (machines-bâtiments) ou des oeuvres d'art.

Disposer d'un état à jour d'objets valorisés est un besoin existant dans les domaines de la comptabilité/gestion financière, de l'assurance et de la maintenance pour toutes les personnes morales ou physiques détenteurs et gestionnaires d'un patrimoine industriel et/ou artistique.

L'invention concerne donc un procédé et un système mis en oeuvre sur ordinateur pour effectuer des inventaires et des valorisations actualisés d'objets tels que des équipements industriels ou des oeuvres d'art, représentant des valeurs financières immobilisées.

### Arrière plan technologique

La connaissance des valeurs réelles, individualisées et actualisées d'objets tels que des équipements industriels ou des oeuvres d'art, représente pour les personnes morales ou physiques détenant et/ou usant de ces objets, un élément essentiel d'une bonne gestion notamment en termes d'assurances, de comptabilité/finances et de maintenance industrielle, notamment.

En matière d'assurances, une entreprise soucieuse de la bonne tenue de ses finances doit choisir une couverture d'assurance et donc un coût qui soit adapté au risque réel, de façon à payer la juste prime d'assurance et à percevoir, en cas de sinistre, une indemnisation la plus proche possible du préjudice subi. L'entreprise sinistrée doit pouvoir en effet se reconstituer le plus rapidement possible, pour recouvrer sa pleine capacité de production.

Pour ce faire, la déclaration des biens à couvrir par les assurances doit être effectuée le mieux possible, tout comme l'état de perte en cas de sinistre.

Cela suppose que les objets concernés (équipements industriels, machines, bâtiments, oeuvres d'art) couverts par les assurances correspondent, en termes de nature, de nombre et de valeur, à ceux contenus de la déclaration initiale d'assurances. Cette dernière se devrait d'être un reflet fidèle de la réalité et de la valeur des objets à assurer. C'est là une condition essentielle pour construire un contrat d'assurance et la prime d'assurance y associée en parfaite adéquation avec les risques encourus.

S'agissant de l'état de perte à effectuer en cas de sinistre, il doit pouvoir être réalisé rapidement pour limiter la perte d'exploitation et accélérer le remplacement des biens d'équipement industriels, tout en étant en cohérence avec les déclarations initiales ayant permis de définir le contrat d'assurance.

A l'heure actuelle, il n'existe aucune méthode ni système rationnel pour faire le recensement précis avec des valeurs réelles individualisées et actualisées d'objets composant un patrimoine industriel et/ou artistique à assurer et/ou à gérer et/ou à maintenir en bon état.

Les relevés sont faits ponctuellement au moment de la déclaration d'assurance et au moment de la déclaration de sinistre sans prise en compte de l'évolution du parc industriel et/ou artistique quant aux quantités, à la nature et à la valeur des objets considérés.

En outre, dans le domaine de la gestion de la maintenance, le gestionnaire ou l'usufruitier ou le propriétaire des biens à maintenir en bon état, notamment de fonctionnement, ne dispose d'aucune donnée sur la fiabilité des équipements dans le temps, sur leur coût de maintenance.

Il existe donc un manque patent d'un procédé et d'un système de relevé et de suivi dynamique de un ou plusieurs ensembles/parcs d'objets constituant un parc industriel et/ou artistique, de manière à optimiser pour le détenteur et/ou de l'utilisateur desdits objets, notamment :
- la gestion des risques liés à ces objets par transfert vers les compagnies d'assurances, (y compris dans le cadre de d'emprunt ou de prêt d'objets),
- la gestion précise et à jour des immobilisations que représentent ces objets, avec des calculs de prix fiables et des approches fines de la valorisation des différents ensembles/parcs formés par ces objets, en matière de comptabilité/finances/gestion,
- ainsi que l'alimentation des systèmes et des logiciels de gestion de maintenance assistée par ordinateur avec des données réelles individualisées et sans cesse renouvelées sur les objets à gérer.

### Problème technique - Objectifs de l'invention

La présente invention vise donc à la résolution du problème technique consistant dans l'absence d'outils permettant à des gestionnaires d'équipements industriels et/ou d'objets d'art répartis sur un ou plusieurs sites, de connaître, contrôler et de suivre en temps réel et de manière actualisée, le contenu, la nature et la valeur d'un ou plusieurs ensemble d'équipements et/ou d'objets d'art. Faute d'avoir ces outils, ces gestionnaires ne peuvent pas optimiser leurs ressources industrielles et/ou artistiques.

Ce problème technique est résolu par l'invention qui fournit un système et un procédé permettant de répertorier et de valoriser précisément, réellement et individuellement, des objets industriels/artistiques, à une date donnée, en mettant en oeuvre des moyens techniques informatiques pour inventorier, classer, valoriser, mettre à jour, échanger des informations sur des parcs d'objets ayant une valeur industrielle et/ou artistique.

La présente invention vise également à satisfaire au moins l'un des objectifs suivants :
- fournir un procédé et un système informatique pour effectuer des inventaires et des valorisations actualisés d'objets choisis parmi les équipements, machines, bâtiments industriels et/ou oeuvres d'art et permettant au détenteur et/ou à l'usufruitier et/ou à l'utilisateur desdits objets de choisir des solutions d'assurance les plus adaptées en termes de prix et de couverture de risques, afin de lui garantir une indemnisation la plus juste possible en cas de sinistre.
- fournir un procédé et un système automatisé d'inventaires et de valorisations actualisés d'objets industriels ou d'objets d'art permettant de mettre en oeuvre des contrats d'assurance justes et cohérents en lien réel avec le patrimoine couvert et d'apporter une information fiable et précise en cas de sinistres, de manière à sécuriser et accélérer la procédure d'indemnisation.
- fournir un outil informatique simple, clair, lisible et fiable pour l'inventaire et la valorisation actualisés d'objets et destiné des utilisateurs qui peuvent être des gestionnaires d'une entreprise, des comptables, des assureurs, des assurés ou des gestionnaires de la maintenance d'équipements industriels.
- fournir un procédé et un système d'inventaires et de valorisations actualisés réels et individualisés d'objets industriels et/ou d'objets d'art de manière à avoir un répertoire fidèle des immobilisations de manière à pouvoir calculer rapidement un prix de revient, de manière à pouvoir valoriser aisément et rapidement l'ensemble des immobilisations.
- fournir un procédé et un système sur un ordinateur pour effectuer des inventaires et des valorisations actualisés réels et individualisés d'objets industriels et/ou d'objets d' art, de manière rapide, économique, proactive et conviviale.

### Brève description de l'invention

Les objectifs énoncés ci-dessus parmi d'autres, sont atteints par la présente invention qui concerne en premier lieu un procédé mis en oeuvre ou implémenté sur un ordinateur pour effectuer des inventaires et des valorisations actualisés d'objets choisis dans le groupe comprenant, de préférence constitué par : les équipement industriels, les oeuvres d'art....
I. ce procédé consistant à mettre notamment en oeuvre :
   1. un serveur informatique ;
   2. une base de données comprise dans le serveur (1) ;
   3. un réseau informatique, de préférence internet, connecté au serveur (1) par l'intermédiaire d'un système hypertexte, de préférence le www ;
   4. une pluralité de terminaux permettant à des utilisateurs d'accéder à un ou plusieurs inventaires contenus dans la base de données (2) ;
   5. des moyens d'acquisition de données sur les objets et sur leurs valeurs (V) réelles et individualisées et éventuellement sur leurs structures ;
   6. des moyens d'enregistrement sur la base de données (2) des données acquises et comparées ;
   7. de préférence des moyens de mutualisation des valeurs (V) ;
   8. de préférence des moyens de recherche de la généalogie des objets et d'actualisation subséquente de leurs valeurs (V) ;
II. ce procédé comprenant les étapes suivantes :
   (a) acquisition de données notamment à l'aide des moyens (5) :
      (i) sur les objets ;
      (ii) sur leurs valeurs (V) ;
      (iii) et éventuellement sur leurs structures.
   (b) enregistrement de ces données dans la base de données (2) sous la forme de fiches-objets correspondant aux objets inventoriés et référencées chacune par au moins un identifiant (Id) ou par un code interne; ledit enregistrement s'effectuant sous le contrôle d'un ou plusieurs administrateurs ;
   (c) lecture et exploitation de la base de données (2) par les utilisateurs à l'aide du réseau (3) et des terminaux (4) ;
   (d) actualisation de la base de données (2) par les administrateurs.

L'invention concerne également un système mis en oeuvre sur un ordinateur pour effectuer des inventaires et des valorisations actualisés d'objets choisis dans le groupe comprenant, de préférence constitués par les équipements industriels (machines, bâtiments) et les oeuvres d'art **caractérisé en ce qu'**il comprend :
1. un serveur informatique ;
2. une base de données comprise dans le serveur (1) ;
3. un réseau informatique, de préférence internet, connecté au serveur (1) par l'intermédiaire d'un système hypertexte, de préférence le www ;
4. une pluralité de terminaux permettant à des utilisateurs d'accéder à la base de données (2) ;
5. des moyens d'acquisition de données sur les objets et sur leurs valeurs (V) réelles et individualisées ;
6. des moyens d'enregistrement sur la base de données (2) des données acquises et comparées ;
7. de préférence des moyens de mutualisation des valeurs (V) ;
8. de préférence des moyens de générations de type d'objets.

Un autre objet de l'invention est un programme d'ordinateur comprenant des instructions de code de programme, de préférence enregistrées sur un support utilisable dans un ordinateur pour l'exécution du procédé selon l'invention.

Le procédé et le système selon l'invention sont des outils dynamiques, clairs, lisibles et fiables de gestion d'objets industriels ou d'objets d'art qui permettent d'optimiser les performances de gestion en termes de gestion des risques/assurances ; comptabilité/finances/gestion et maintenance.

Les objets considérés peuvent être :
- des équipements industriels tels que des machines (standards, intermédiaires ou spéciales) ou des outils ;
- des bâtiments industriels ;
- des objets d'art (meubles; peintures, sculptures...) ;
- tout type d'objet nécessitant d'être inventorié, suivi et/ou valorisé.

Le procédé et le système suivant l'invention transforment ainsi des données physiques sur un ensemble d'objets qui sont eux-mêmes des entités physiques, en données physiques constituées par des inventaires valorisés et actualisés, et permettent un échange, une communication de ces données physiques avec des utilisateurs.

Les utilisateurs peuvent être les détenteurs ou les usufruitiers des objets. Ce sont par exemple des entreprises. Chaque utilisateur détenteur ou usufruitier peut avoir un plusieurs inventaires stockés sur la base de données, relevant d'une ou plusieurs implantations ou sites.

Dans le domaine des assurances, les utilisateurs détenteurs ou usufruitiers peuvent être des assurés. Dans ce domaine, les utilisateurs peuvent être des assureurs ou des courtiers.

Les étapes et les moyens d'acquisition/saisie, d'enregistrement et d'actualisation des données ont nécessité des développements et une organisation informatiques spécifiques pour la construction de la base de données.

Dès lors qu'il s'agit d'une finalité gestion des risques/assurances, le procédé et le système selon l'invention vont permettre d'obtenir une connaissance détaillée réelle et individualisée des objets et de leur valeur et donc des risques. Il est alors possible de faire des déclarations dynamiques permanentes des objets et donc des capitaux qu'ils représentent de façon à adapter la déclaration d'assurance à des montants spécifiques objectifs dans le respect du code des assurances ainsi que des états de perte permettant l'indemnisation juste et équitable du préjudice en cas de sinistre.

Dès lors que la finalité et la comptabilité/finance/gestion, le procédé et le système selon l'invention permettant une gestion précise et à jour des immobilisations, une validation de la révision, une validation du commissariat des calculs de prix fiables sur les objets (machines, bâtiments, équipements) immobilisés et une approche affinée globale de la valorisation du parc ou des parcs d'objets d'une personne morale ou d'une personne physique.

Dès lors qu'il s'agit d'utilisateurs finaux impliqués dans la maintenance, le procédé et le système selon l'invention permettent une synchronisation des immobilisations avec un logiciel de gestion de maintenance assisté par ordinateur (GMAO) des indemnisations précises et des analyses des renouvellements des immobilisations et des coûts d'entretien.

Pour les assureurs, l'invention permet la validation des capitaux à assurer et donc l'émission de contrats adaptés dans lesquels il n'est pas recouru à la règle proportionnelle, particulièrement pénalisante pour les entreprises qui doivent supporter une part proportionnelle du dommage s'il résulte des estimations que la valeur de la chose assurée excède au jour du sinistre la somme garantie.

L'invention permet également pour l'établissement du contrat d'assurance, l'annulation de l'effet d'indice en cas d'abonnement annuel. Cela signifie que seules les valeurs réelles des biens expertisés, consignés dans la base de données selon l'invention et déclarés à l'assureur, sont prises en compte, sans effet d'indexation automatique en décalage avec la réalité des prix.

En cas de sinistre, l'invention donne accès aux valeurs avant sinistre et à un état de pertes. Cela permet une estimation précise des provisions d'ouverture de sinistre qui sont parfaitement démontrées et intégralement justifiées. D'où il s'ensuit que l'assuré victime d'un sinistre peut très rapidement reprendre une activité s'agissant des moyens affectés par le sinistre. On observe donc là une optimisation du fonctionnement de l'assurance.

Le procédé et le système selon l'invention permettent de répertorier les véritables valeurs à neuf, ou tout autre système de valeur agréé, des objets immobilisés. Ces données sont cruciales en cas d'indemnisation par les assurances au moment d'un sinistre. En cas de vente de l'objet, lesdites données retracent l'historique et éclairent parfaitement la transaction en permettant notamment une évaluation du prix de revente.

### Procédé

Suivant une disposition avantageuse du procédé selon l'invention, l'étape (a.i) d'acquisition de données sur les objets, comporte l'inventaire des objets sur site et le recueil de données sur ces objets à l'aide de moyens (5) d'acquisition comprenant :
- 5. 1 - éventuellement un lecteur du code d'identification de l'objet, de préférence code barre, code QRS, RFID, ledit code comprenant l'identifiant (Id) et tout ou partie des données de la fiche-objet de l'objet ;
- 5.2 - un module de saisie (5.2) connecté ou susceptible d'être connecté à la base de données (2), et comportant :
   * 5.2.1 * une interface de saisie accessible par l'intermédiaire d'un ordinateur mobile et générée par une application implémentée sur l'ordinateur portable et/ou sur un serveur, de préférence le serveur (1), par l'intermédiaire d'un réseau, de préférence le réseau (3); cette interface (2.1) comportant des champs de saisie paramétrés choisis dans le groupe comprenant, de préférence constitué par :
      - des champs (C1) à compléter librement,
      - des champs (C2) à compléter à l'aide d'un menu déroulant,
      - des champs (C3) à compléter par saisie semi-automatique.
   * 5.2.2 * un sas de contrôle des données saisies dans lequel les données saisies sont validées ou non pour l'enregistrement (b) dans la base de données par 1'(ou les) administrateur(s), le processus de fonctionnement dudit sas étant le suivant :
      - 5.2.2.1- les contenus des champs (C1) sont librement complétés puis soumis, dans le sas (5.2.2), au contrôle du (ou des) administrateur(s) qui valide(nt) ou non l'enregistrement dans la base de données (2) selon l'étape (b) ;
      - 5.2.2.2- les contenus des champs (C2) sont choisis, via le sas (5.2.2), dans un menu déroulant contenu dans la base de données (2) et sont enregistrés dans la base de données (2) selon l'étape (b) ;
      - 5.2.2.3- les contenus des champs (C3) sont comparés avec ceux contenus dans la base de données (2). Si les contenus des champs existent déjà dans la base de données, il est procédé à une duplication des données de la base (2) dans le champ (C3) de la fiche correspondant à l'objet concerné et à un enregistrement selon l'étape (b).

Cette étape (a.i) consiste par exemple en pratique, dans une première phase, en un relevé sur le terrain par un expert qui procédera à un recensement et à une analyse des objets considérés, par exemple des machines, des outils, des bâtiments ou des objets d'art, sur un site donné.

Suivant une première possibilité, la 1^{ère} phase de l'étape (a.i) s'effectue dans un mode non connecté avec le serveur (1) sur le site où sont localisés les objets. Le relevé des données sur le terrain s'opère par exemple sur un support papier.
Il est procédé ensuite à une saisie de ces données dans le module de saisie (5.2).
Dans cette première possibilité, intervient alors une étape (b') ultérieure d'enregistrement des données acquises à l'étape (a.i), dans la base de données (2) dans un mode connecté avec le serveur (1).

Suivant une deuxième possibilité, la 1^{ère} phase de l'étape (a.i) s'effectue dans un mode non connecté avec le serveur (1) sur le site où sont localisés les objets. Le relevé des données sur le terrain s'opère par exemple sur un support numérique équipé des moyens de saisie selon l'invention [module de saisie (5.2)], voire des autres éléments constitutifs de la base de données. Il peut s'agir avantageusement d'un ordinateur mobile sur lequel sont embarqués la base de données (2) et le module de saisie (5.2).
Dans cette 2^{ème} possibilité, intervient alors une étape (b") ultérieure de synchronisation de la base de données (2) embarquée avec la base de données (2) du serveur (1).

De préférence, l'ordinateur mobile mis en oeuvre dans la 2^{ème} possibilité, est une tablette numérique ou tout autre dispositif analogue, qui joue le rôle de lecteur (5.1) du code d'identification de l'objet et d'ordinateur portable. Cela facilite grandement la tâche de l'expert dans cette acquisition de données et cela permet en outre un gain de temps significatif. Le code d'identification des objets concernés est, par exemple un code barre, un code QRS ou un code supporté par un RFID.

De préférence, l'étape (a.ii) d'acquisition de données comporte la mise en oeuvre de l'interface de saisie (5.2.1) permettant la création de la fiche-objet, cette interface de saisie (5.2.1) comprenant un champ identifiant (C3i) associé à un champ (C3v) dont le contenu est la valeur (V) de l'objet, la saisie et l'enregistrement de ce champ (C3v) s'effectuant comme suit :
- passage du contenu du champ (C3i) dans le sas (5.2.2) de contrôle,
- comparaison du contenu du champ (C3i) avec ceux contenus dans un registre Ri de la base de données regroupant tous les identifiants (Id) déjà enregistrés ainsi que toutes les valeurs (V) associées et elles aussi déjà enregistrées ;
- Si l'identifiant (Id) recherché existe déjà dans le registre Ri, il est procédé :
   ■ à un affichage de cet identifiant (Id) et de la valeur (V) associée ;
   ■ à un contrôle par 1'(ou les) administrateur de (Id) et de (V) affichés ;
   ■ et à une duplication de la valeur (V) associée à cet identifiant (Id) dans le registre Ri, dans la fiche correspondant à l'objet concerné puis à un enregistrement selon l'étape (b).
- Si l'identifiant (Id) n'existe pas dans la base de données, il est procédé à une saisie manuelle de l'identifiant (Id) dans le champ (C3i) de l'interface de saisie (5.2.1) générant la fiche correspondant à l'objet concerné et à un enregistrement selon l'étape (b), et, de préférence ultérieurement, à une recherche et à une saisie manuelle dans le champ (C3v) de l'interface de saisie (5.2.1) de la valeur (V) associé à l'identifiant (Id) et enfin à un enregistrement selon l'étape (b).

En l'absence d'identifiant (Id), le champ (C3i) est complété par un code interne non partagé avec les autres objets identiques. La saisie de la valeur de l'objet identifié par un code interne, s'effectue manuellement dans le champ (C3v) associé.

### Mutualisation des valeurs

Suivant une modalité remarquable de l'invention, le procédé comprend un processus de mutualisation des valeurs pour les objets inventoriés dans la base de données (2) caractérisés par un même identifiant (Id), ledit processus consistant à :
1. Rechercher dans la base de données (2) les objets ayant un même identifiant (Id) ;
2. Afficher tous les objets présents dans la base (2) et ayant un même identifiant (Id) ;
3. Saisie de la valeur actualisée de l'identifiant (Id) ;
4. Sélection des objets (Id) à mettre à jour ;
5. Enregistrement de la valeur actualisée (V) pour les objets (Id) sélectionnés en -4-.

L'invention propose ainsi un outil de recherche des objets ayant un même identifiant (Id) et d'affectation de nouvelles valeurs (V) datées aux objets correspondants.

Le processus de mutualisation permet le contrôle et homogénéisation des informations de la base de données (2), au travers d'une routine de vérification des données, de leur validité et de leur concordance.
Cela permet, d'une part, d'accélérer le temps de traitement des expertises en réutilisant les données de valeurs déjà saisies, et, d'autre part, de disposer d'une base de données saine, sans doublons.

### Recherche_de_la_généalogie des_objets,

Suivant une autre modalité remarquable de l'invention, tout partie des objets inventoriés dans la base de données(2) sont des objets commercialisés et évolutifs. Dans ce cas, le procédé comprend un processus de création et recherche de la généalogie des objets repérés par leur identifiant (Id), ledit processus consistant à :
1. rechercher les identifiants (Idₓ), de préférence dans le registre Ri, d'objets qui sont répertoriés dans la base de données (2) et qui ne sont plus commercialisés ;
2. rechercher pour chaque identifiant (Idₓ) retrouvé en -1- un éventuel identifiant-remplaçant (Idr) ;
3. reconstituer les généalogies des différentes générations d'identifiants (Idₓ) et d'identifiants-remplaçants (Idr), chaque généalogie aboutissant à un identifiant-remplaçant (Idrd) de dernière génération ;
4. éventuel contrôle de chaque généalogie ;
5. recherche et saisie manuelle de la valeur associée à chaque (Idrd) ;
6. affectation de la valeur (Vdg) associée à chaque (Idrd) aux identifiants (Idₓ) des générations parentes de chaque généalogie ;
7. transfert de cette valeur (Vdg) aux objets dont les identifiants sont des identifiants (Idₓ) et qui sont inventoriés dans la base de données (2).

L'invention propose ainsi un outil qui permet, après recherche des évolutions successives des objets identifiés par un identifiant donné (Idₓ) auprès des fabricants, permet la création d'arborescence (généalogies) des différentes générations d'objets (Remplacement d'équipement) et l'affectation aux objets d'une même arborescence de la valeur (V) de l'objet de dernière génération.
Cela permet d'améliorer le temps de valorisation des équipements n'existant plus sur le marché en leur attribuant un type remplaçant.

### Etape (c)

Pour la mise en oeuvre de cette étape, la base de données (2) comporte de préférence un guichet (front office) et un arrière-guichet (back office), le guichet étant accessible aux utilisateurs et leur permettant, conformément à l'étape (c), de consulter et d'extraire au moins une partie des données relatives à un ou plusieurs inventaires avec leurs valorisations actualisés d'objets. Un tel accès est soumis à une autorisation d'un (ou des) administrateur(s) ;
l'arrière-guichet étant accessible aux administrateurs notamment pour les échanges de données et pour les mises à jour selon l'étape (d).

Chaque utilisateur a un accès réservé et sécurisé à certaines données: leurs données propres ou des données dont les propriétaires leur ont autorisé l'accès. Ces accès sont placés sous le contrôle du ou des administrateurs.

Lors de la lecture des données (étape c), les utilisateurs peuvent constater des nécessités de corrections. Ils peuvent alors demander à l'administrateur ou aux administrateurs d'effectuer ces corrections.

Avantageusement, l'étape (d) d'actualisation des données consiste essentiellement à mettre à jour les inventaires d'objets répertoriés dans la base de données, cette mise à jour pouvant être effectuée par les administrateurs par l'intermédiaire de l'arrière-guichet.

Les processus ou les outils définis ci-dessus reposent sur la mise en oeuvre dans la base de données, de développements informatiques spécifiques, impliquant des mémoires, des registres et une organisation adaptés.

### Cas d'application n°1: Les objets sont des machines industrielles

Dans ce cas, les fiches-objets de la base de données (2) et l'interface (5.2.1) du module de saisie (5.2) comprennent avantageusement :
■ des Champ de saisie (C1) choisis dans le groupe comprenant et, de préférence, constitué par : Dénomination ; Numéro de série ; Référence interne ; Commentaires ;
■ des Champ de saisie (C2) choisis dans le groupe comprenant et, de préférence, constitué par : Famille ; Fabricant ; Implantation ;
■ des Champ de saisie (C3) Identifiant (C3i) correspondant au type de la machine.

### Assurances/Comptabilité-Finances

Dans ce cas n°1, les utilisateurs exploitent préférablement ce procédé :
■ dans le domaine de l'assurance notamment pour déclarer la valeur de leurs biens à leurs assureurs et/ou pour faire un état de perte en cas de sinistre ;
■ et/ou dans le domaine de la comptabilité pour mettre à disposition les valeurs à neuf des objets constituant des immobilisations comptables.

### Gestion de Maintenance Assistée par Ordinateur GMAO

Suivant une variante de l'invention, l'exploitation des données est particulièrement intéressante en GMAO.

Dans cette variante, l'étape (a.i) d'acquisition de données sur les structures desdites machines (objets), comporte l'inventaire des machines sur site et la décomposition technique des machines en sous ensembles, de préférence en sous ensembles pneumatiques, mécaniques, et hydrauliques.

La mise à jour par les utilisateurs dans le cadre de l'étape (c) consiste à saisir les événements liés aux machines tels que les opérations d'entretien et les pannes ainsi que les données attachées à ces événements, de préférence le temps d'intervention, le coût d'intervention, les pièces changées.

Les utilisateurs exploitent ce procédé en Gestion de Maintenance Assistée par Ordinateur (GMAO), notamment pour calculer la vétusté des objets.

### Cas d'application n°2 : les objets considérés sont des oeuvres d'art

Dans un tel cas, les utilisateurs exploitent ledit procédé dans le domaine de l'assurance notamment pour déclarer la valeur de leur bien à leur assureur et établir ainsi un contrat ajusté à leurs besoins et/ou pour faire un état de perte en cas de sinistre de manière à obtenir une indemnisation juste et équitable.

### Description détaillée de l'invention

Un mode de mise en oeuvre du procédé selon l'invention et un mode de réalisation du système selon l'invention sont décrits ci-après à titre d'exemples non limitatifs, en référence aux dessins annexés dans lesquels :

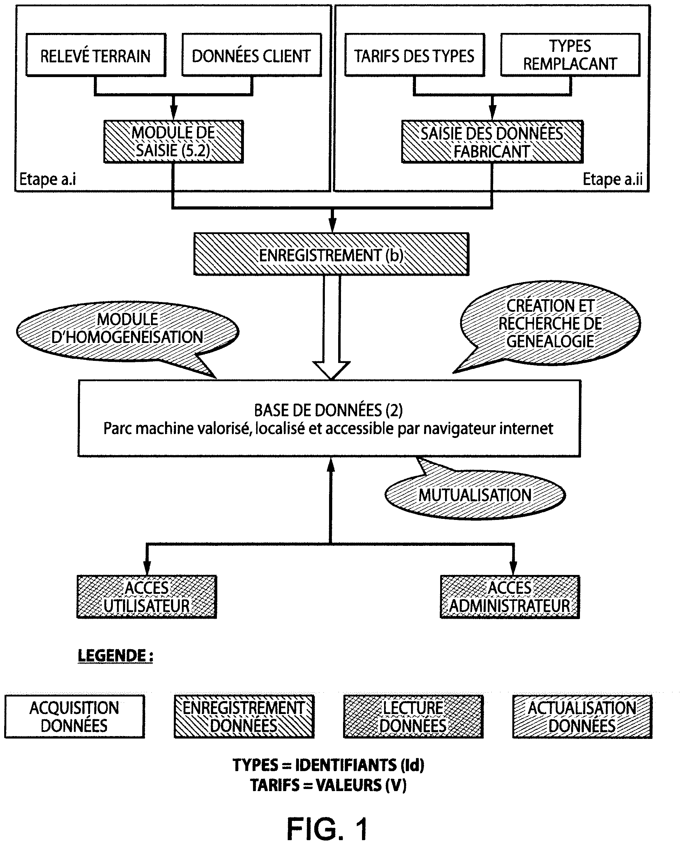

- La figure 1 représente l'organigramme du procédé selon l'invention,

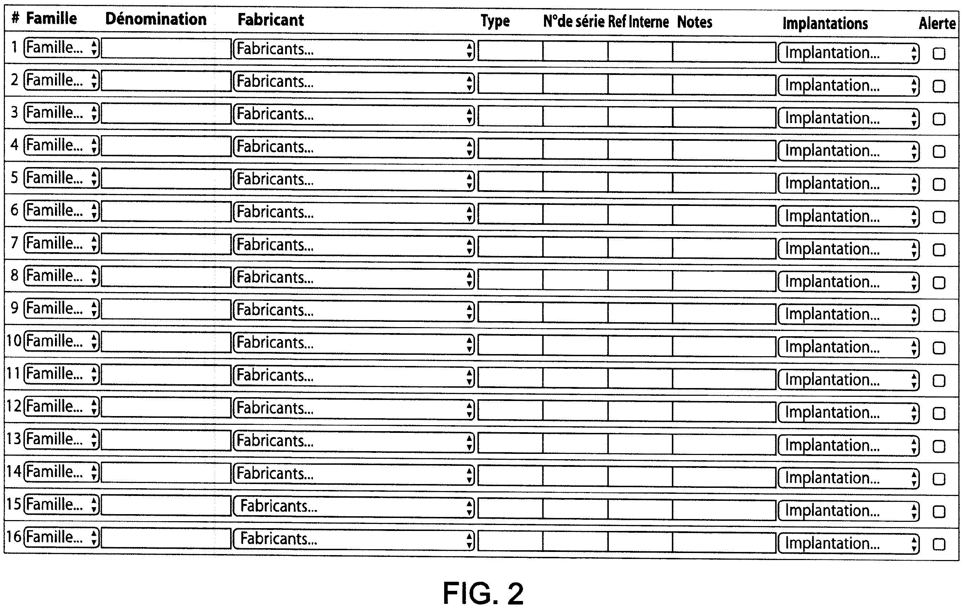

- La figure 2 représente l'interface de saisie (5.2.1) du module de saisie (5.2),
- La figure 3 représente des schémas du processus des étapes (a.i) & (a.ii),
- La figure 4 représente un schéma du processus de mutualisation des valeurs (tarifs) pour des objets (immobilisations) de la base de données ayant un même identifiant (type),
- La figure 5 représente un schéma du processus de recherche de la généalogie des différents identifiants (types) des objets (immobilisations) de la base de données.

L'exemple de mise en oeuvre du procédé et de réalisation du système selon l'invention, concerne la réalisation d'inventaires et de valorisations actualisés d'objets constitués par les immobilisations d'une entreprise, à savoir des équipements industriels tels que des machines ou bien encore les bâtiments.

Comme montré sur la figure (1) le système comprend un serveur informatique (1) incluant une base de données (2). Le serveur (1) est relié par un réseau informatique internet (3) [par exemple via un système hypertexte www] à une pluralité de terminaux (4) qui permettent à des utilisateurs d'accéder à la base de données (2) pour échanger avec elle des informations relatives aux inventaires qui les concernent. Le contrôle de l'accès des utilisateurs aux informations est assuré par des administrateurs.

Le système comporte également des moyens d'acquisition (5) de données sur les objets, en l'occurrence les immobilisations, et sur leur valeur réelle (V) voire sur leur structure. Ces moyens d'acquisition (5) comprennent un module de saisie (5.2), en aval duquel sont prévus des moyens d'enregistrement (6) sur la base de données (2) des données acquises et comparées dans les moyens (5).

Dans le présent exemple, on construit la base de données (2) en y stockant pour chaque utilisateur un ou plusieurs ensembles de fiches-objets correspondant à des objets/immobilisations (machines-bâtiments), correspondant à un ou plusieurs sites, par exemple. Ces fiches-objets sont directement issues de l'interface de saisie montrée à la figure (5.2.1) montré sur la figure (2).

Dans l'étape (a) d'acquisition des données, un expert effectue un relevé de terrain pour recueillir toutes les données utiles pour qualifier un ensemble d'objets ou d'immobilisations correspondant par exemple à un site donné.

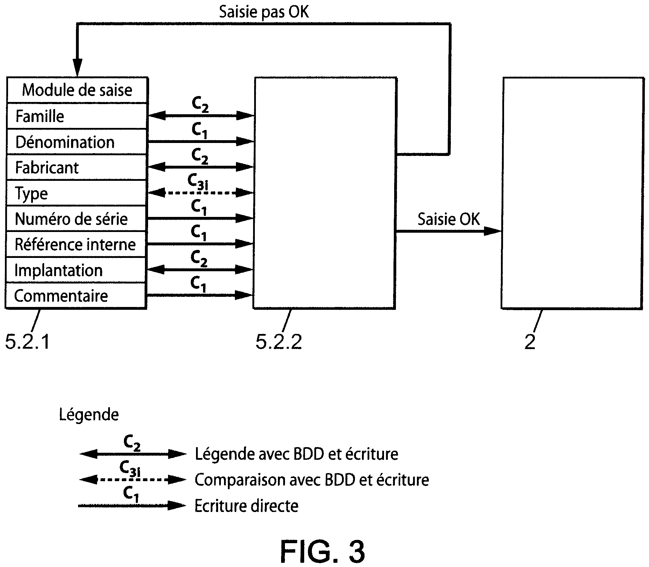

Comme montré sur la figure 3 qui représente le module de saisie (5.2) comprenant l'interface de saisie (5.2.1) et le sas de contrôle (5.2.2), ces données peuvent être la "famille" à laquelle appartient l'immobilisation (par exemple : la machine), sa "dénomination", son "fabricant", un identifiant (Id) en l'occurrence le "type", un "numéro de série", une "référence interne", et une "implantation".
Les données qui complètent les fiches-objets, comprennent également les "tarifs" ou "valeurs" des différentes immobilisations (*e.g*.machines) référencées par leurs identifiants (Id) en l'occurrence leurs "types".
Avantageusement, les fiches-objets peuvent comporter des données complémentaires relatives par exemple aux fabricants. Il peut s'agir par exemple des identifiants-remplaçants (Idr) ou "types"-remplaçant des immobilisations (*e.g.* machines).

Les données recueillies sur le terrain peuvent l'être de manière manuelle sur un support papier pour être ensuite transférées via le module de saisie (5.2) dans la base de données (2) du serveur (1), lors d'une étape (b') ultérieure d'enregistrement, en mode connecté avec le serveur (1).

Selon une alternative, l'étape (a.i) d'acquisition des données peut se faire sur le site où sont localisés les objets, en mode non connecté avec le serveur (1), à l'aide d'un ordinateur mobile (1) sur lequel sont embarqués la base de données (2) et le module de saisie (5.2). La saisie et l'enregistrement des données s'opèrent ainsi directement sur le site où l'on effectue le relevé de terrain en préalable à l'inventaire. On procède ensuite dans une étape (b") ultérieure à une synchronisation de la base de données (2) embarquée avec la base de données (2) du serveur (1).
Pour faciliter la saisie des données sur le site, il est avantageux d'utiliser un lecteur d'un code d'identification de l'objet. Ce lecteur (5.1) peut être par exemple une tablette numérique qui peut jouer également le rôle d'ordinateur portable comprenant la base de données (2) embarquée.

Selon une autre alternative, il est possible d'envisager une saisie de données sur le site où sont localisés les objets, en mode connecté avec le serveur (1). Dans ce cas, la saisie s'effectue sur un ordinateur mobile connecté avec le serveur (1), selon une procédure en ligne de saisie par l'interface (5.2.1), de contrôle par le sas (5.2.2), d'acquisition des valeurs V (tarifs) [étape (a.ii)], et d'enregistrement selon l'étape (b).

Le fonctionnement de la saisie par l'interface (5.2.1), du contrôle des données saisies par le sas (5.2.2) et de l'enregistrement des données validées [étape (b)] dans la base de données (2) est montré sur la figure (3).
Les données saisies dans les champs (C1) de l'interface de saisie (5.2.1) sont librement introduites et sont ensuite enregistrées dans la base de données après contrôle par l'administrateur.
Les données saisies dans les champs (C2) de l'interface de saisies (5.2.1), sont introduites par l'intermédiaire d'un menu déroulant intégré dans la base de données (2). Cette saisie dans les champs (c2) entraîne donc un échange avec la base de données (2) par l'intermédiaire du sas de contrôle (5.2.2).
Les champs (C3) de l'interface de saisie (5.2.1) sont soumis à un processus de saisie semi-automatique, dans lequel intervient une comparaison du contenu du champ (C3) avec la base de données. Le champ (C3) peut être un champ identifiant (C3i) qui caractérise et identifie l'objet. En l'espèce, il contient l'identifiant(Id) qui est le "type" de la machine.

Dès lors que le type saisi dans les champs (C3i) existe déjà dans la base de données il est reconnu et s'affiche dans le sas de contrôle (5.2.1) où l'administrateur peut procéder à sa validation. Si le "type" existe déjà dans la base de données (2), la valeur (V) associée à ce type existe également. Elle est donc également affectée automatiquement après passage dans le sas de contrôle (5.2.2) à l'objet en cours de saisie. Les données saisies ("type" et "valeur V = tarif") sont ensuite enregistrées conformément à l'étape (b).
Si l'identifiant (Id) c'est-à-dire le type en l'espèce n'existe pas dans la base de données, il est procédé à une saisie manuelle du type et de sa "valeur V = tarif ".

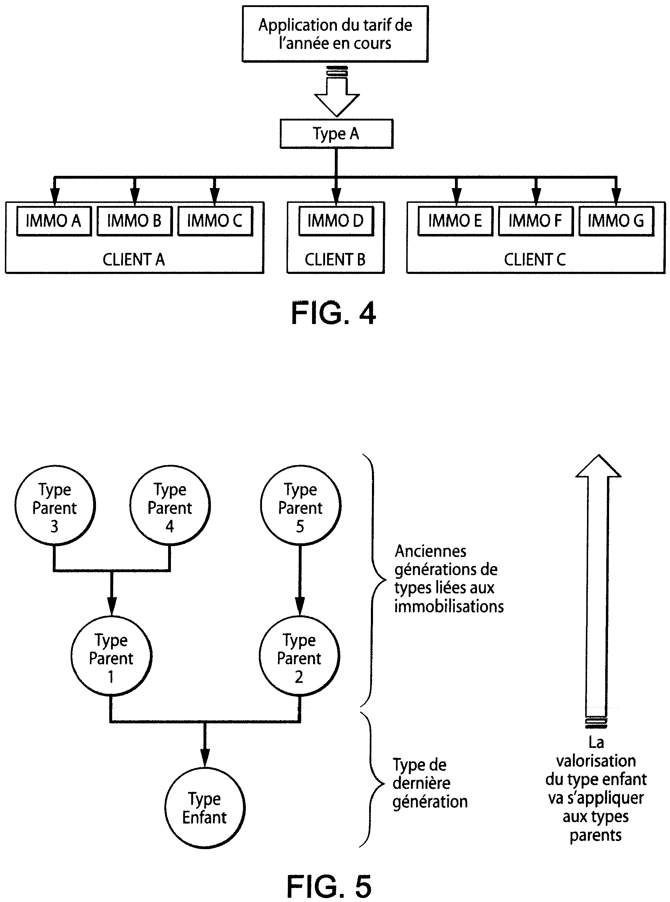

La figure 4 illustre le processus de l'utilisation des valeurs (V) = tarifs, pour les objets, en l'occurrence les immobilisations (machines/bâtiments) inventoriées. A chaque identifiant (Id) ou type (A) sur la figure 4, correspond une pluralité d'objets en l'occurrence des immobilisations [IMMO A, B, C, D, E, F, G] rattachées à un ou plusieurs utilisateurs en l'occurrence trois dans l'exemple de la figure 4. L'administrateur recherche la valeur V ou le tarif actualisé du type (A), le saisit dans la base de données (2) et le système procède automatiquement à l'harmonisation des valeurs V = tarifs pour toutes les immobilisations [IMMO A, B, C, D, E, F, G] concernées.
Le tarif ou valeur (V) saisi correspond par exemple à une valeur hors-taxes de l'immobilisation ou objet de type (A) à une date donnée.
Pour ce faire, le système recherche le type A dans la base de données (2), affiche toutes les immobilisations présentes dans la base liées au type A recherché, permet à l'administrateur de saisir le tarif de l'année en cours, de sélectionner ensuite les immobilisations à mettre à jour et d'appliquer le tarif actualisé aux immobilisations sélectionnées.

La figure 5 montre un processus spécifique au procédé et au système selon l'invention dénommé "génération de types". Il s'agit d'un processus de création et de recherche de la généalogie d'un identifiant (Id) ou type, pour les objets dans la base de données (2), avec affectation de la valeur V (tarif) de la dernière génération à tous les identifiants (Id) ou type des générations parentes de chaque généalogie.
Les objets considérés sont des produits commerciaux évolutifs susceptibles d'être remplacés.
La première étape du processus consiste à consulter le fabricant d'un équipement donné identifié par un identifiant (Idx) ou type, qui n'est plus commercialisé, afin de connaître l'identifiant remplaçant (Idr) ou type-remplaçant.
Par exemple, l'administrateur établit, renseignement pris auprès du fabricant, que le type-parent (3) et le type-parent (4) de la figure (5) n'existent plus, ne sont plus commercialisés et qu'ils sont remplacés par le type-parent (1) de valeur (V1). Il est donc créé une généalogie pour laquelle on saisit la valeur (V1) du type-parent (1). Cette valeur (V1) de dernière génération va s'appliquer au type-parent (3) et au type-parent (4) et va être transférée à tous les objets de la base de données dont les identifiants sont des identifiants (Idx) : type-parent (3), type-parent (4) et type-parent (1).
La figure 5 montre, qu'après recueil de l'information selon laquelle le type-parent (5) n'est plus commercialisé, il est crée une généalogie dans laquelle le type parent (5) est remplacé par le type-parent (2) dont la valeur (V2) est appliquée au type-parent (5).
Ultérieurement, l'administrateur apprend du fabricant que les type-parent (1) et type-parent (2) ne sont plus commercialisés et sont remplacés par le type-enfant. La valeur (Vdg) du type-enfant est appliquée à tous les types (identifiants Idx) des générations ascendantes de la généalogie représentée sur la figure 5. La valeur (Vdg) est ensuite affectée à tous les objets de la base de données (2) de type-parent 1 à 5 et bien évidemment à tous les objets de type-enfant.

Chaque utilisateur peut consulter via un terminal (4) et le réseau internet (3) en www, son ou ses parcs d'immobilisations/ou de machines valorisés et localisés, par l'intermédiaire du guichet de la base de données (2).
Chaque utilisateur accède ainsi à un inventaire valorisé et actualisé de un ou plusieurs parcs ou ensembles d'objets situés sur un ou plusieurs sites. Chaque utilisateur peut établir rapidement des déclarations en vue de contracter des assurances pour le transfert de risques sur tout ou partie des immobilisations/machines/bâtiments concernés.
Il en va de même pour établir des états de sinistre sur tout ou partie de ces objets répertoriés et valorisés, de manière actualisée dans la base de données (2).
Dans le domaine de l'assurance les utilisateurs peuvent être les assurés, les assureurs, les courtiers.

En comptabilité-finance, l'invention donne un accès rapide et simple à des états à jour pour les utilisateurs.

En GMAO, le procédé selon l'invention comprend une étape (a.iii) d'acquisition de données sur les structures des objets ( machines) et en particulier une décomposition technique des machines en sous-ensemble pneumatique, mécanique et hydraulique. L'application du procédé du système selon l'invention à la GMAO, implique également la mise à jour avec des données telles que les évènements liés aux machines, à savoir les opérations d'entretien, les pannes, avec les données attachées à ces évènements comme par exemple, le temps d'intervention, le coût d'intervention et les pièces changées.

L'outil selon l'invention permet notamment le calcul de la vétusté des machines.

Les oeuvres d'art, les systèmes de procédé selon l'invention sont des plus utiles pour les déclarations d'assurances et les états de perte en cas de sinistre, de même que pour l'expertise d'art à des fins d'évaluation financière.

## Revendications

1. Procédé mis en oeuvre sur un ordinateur pour effectuer des inventaires et des valorisations actualisés d'objets choisis dans le groupe comprenant, de préférence constitué par : les équipement industriels, les oeuvres d'art....
I. ce procédé consistant à mettre notamment en oeuvre :
1. un serveur informatique ;
2. une base de données comprise dans le serveur (1) ;
3. un réseau informatique, de préférence internet, connecté au serveur (1) par l'intermédiaire d'un système hypertexte, de préférence le www ;
4. une pluralité de terminaux permettant à des utilisateurs d'accéder à un ou plusieurs inventaires contenus dans la base de données (2) ;
5. des moyens d'acquisition de données sur les objets et sur leurs valeurs (V) réelles et individualisées et éventuellement sur leurs structures ;
6. des moyens d'enregistrement sur la base de données (2) des données acquises et comparées ;
7. de préférence des moyens de mutualisation des valeurs (V) ;
8. de préférence des moyens de recherche de la généalogie des objets et d'actualisation subséquente de leurs valeurs (V).
II. ce procédé comprenant les étapes suivantes :
(a) acquisition de données notamment à l'aide des moyens (5) :
(i) sur les objets ;
(ii) sur leurs valeurs(V) ;
(iii) et éventuellement sur leurs structures.
(b) enregistrement de ces données dans la base de données (2) sous la forme de fiches-objets correspondant aux objets inventoriés et référencées chacune par au moins un identifiant (Id) ou par un code interne; ledit enregistrement s'effectuant sous le contrôle d'un ou plusieurs administrateurs ;
(c) lecture et exploitation de la base de données (2) par les utilisateurs et/ou les administrateurs à l'aide du réseau (3) et des terminaux (4) ;
(d) actualisation de la base de données (2) par les administrateurs.

2. Procédé selon la revendication 1 **caractérisé en ce que** :
◆ l'étape (a.i) d'acquisition de données sur les objets, comporte l'inventaire des objets sur site et le recueil de données sur ces objets à l'aide de moyens (5) d'acquisition comprenant :
- 5. 1 - éventuellement un lecteur du code d'identification de l'objet, de préférence code barre, code QRS, RFID, ledit code comprenant l'identifiant (Id) et tout ou partie des données de la fiche-objet de l'objet ;
- 5.2 - un module de saisie (5.2) connecté ou susceptible d'être connecté à la base de données (2), et comportant :
* 5.2.1 * une interface de saisie accessible par l'intermédiaire d'un ordinateur mobile et générée par une application implémentée sur l'ordinateur mobile et/ou sur un serveur, de préférence le serveur (1), par l'intermédiaire d'un réseau, de préférence le réseau (3); cette interface (2.1) comportant des champs de saisie paramétrés choisis dans le groupe comprenant, de préférence constitué par :
- des champs (C1) à compléter librement,
- des champs (C2) à compléter à l'aide d'un menu déroulant,
- des champs (C3) à compléter par saisie semi-automatique.
* 5.2.2 * un sas de contrôle des données saisies dans lequel les données saisies sont validées ou non pour l'enregistrement (b) dans la base de données par 1'(ou les) administrateur(s), le processus de fonctionnement dudit sas étant le suivant :
-5.2.2.1- les contenus des champs (C1) sont librement complétés puis soumis, dans le sas (5.2.2), au contrôle du (ou des) administrateur(s) qui valide(nt) ou non l'enregistrement dans la base de données (2) selon l'étape (b) ;
-5.2.2.2- les contenus des champs (C2) sont choisis via le sas (5.2.2) dans un menu déroulant contenu dans la base de données (2) et sont enregistrés dans la base de données (2) selon l'étape (b) ;
-5.2.2.3- les contenus des champs (C3) sont comparés avec ceux contenus dans la base de données (2). Si les contenus des champs existent déjà dans la base de données, il est procédé à une duplication des données de la base (2) dans le champ (C3) de la fiche correspondant à l'objet concerné et à un enregistrement selon l'étape (b).
◆ l'étape (a.ii) d'acquisition de données sur les valeurs (V) des objets, comporte la mise en oeuvre de l'interface de saisie (5.2.1) permettant la création de la fiche-objet, cette interface de saisie (5.2.1) comprenant un champ identifiant (C3i) associé à un champ (C3v) dont le contenu est la valeur (V) de l'objet, la saisie et l'enregistrement de ce champ (C3v) s'effectuant comme suit :
- passage du contenu du champ (C3i) dans le sas (5.2.2) de contrôle ;
- comparaison du contenu du champ (C3i) avec ceux contenus dans un registre Ri de la base de données regroupant tous les identifiants (Id) des objets déjà enregistrés ainsi que toutes les valeurs (V) associées et elles aussi déjà enregistrées ;
- si l'identifiant (C3i) recherché existe déjà dans le registre Ri, il est procédé :
■ à un affichage de cet identifiant (C3i) et de la valeur (C3v) associée ;
■ à un contrôle par 1'(ou les) administrateur de (C3i) et de (C3v) affichés ;
■ et à une duplication, dans la fiche correspondant à l'objet concerné, de la valeur (C3v) associée à cet identifiant (C3i) dans le registre Ri, puis à un enregistrement selon l'étape (b).
- si l'identifiant (C3i) n'existe pas dans la base de données, il est procédé à une saisie manuelle de l'identifiant (Id) dans le champ (C3i) de l'interface de saisie (5.2.1) générant la fiche correspondant à l'objet concerné et à un enregistrement selon l'étape (b), et, de préférence ultérieurement, à une recherche et à une saisie manuelle dans le champ (C3v) de l'interface de saisie (5.2.1) de la valeur (V) associé à l'identifiant (Id) et enfin à un enregistrement selon l'étape (b).

3. Procédé selon la revendication 1 ou 2 **caractérisé en ce que** l'étape (a.i) comporte une 1^{ère} phase qui s'effectue dans un mode non connecté avec le serveur (1) sur le site où sont localisés les objets (relevé papier puis saisie dans le module de saisie (5.2)), et **en ce qu'**il comprend une étape (b') ultérieure d'enregistrement des données acquises à l'étape (a.i), dans la base de données (2) dans un mode connecté avec le serveur (1).

4. Procédé selon la revendication 3 **caractérisé en ce que** l'étape (b) s'effectue également dans un mode non connecté avec le serveur (1) sur le site où sont localisés les objets, **en ce que** l'on met en oeuvre un ordinateur mobile sur lequel sont embarqués la base de données (2) et le module de saisie (5.2) et **en ce qu'**il comprend une étape (b") ultérieure de synchronisation de la base de données (2) embarquée avec la base de données du serveur (1).

5. Procédé selon la revendication 4 **caractérisé en ce que** l'on met en oeuvre une tablette numérique qui joue le rôle de lecteur (5.1) du code d'identification de l'objet et d'ordinateur portable.

6. Procédé selon l'une au moins des revendications précédentes **caractérisé en ce qu'**il comprend un processus de mutualisation des valeurs pour les objets inventoriés dans la base de données (2) **caractérisés par** un même identifiant (Id), ledit processus consistant à :
1. Rechercher dans la base de données (2) les objets ayant un même identifiant (Id) ;
2. Afficher tous les objets présents dans la base (2) et ayant un même identifiant (Id) ;
3. Saisie de la valeur actualisée de l'identifiant (Id) ;
4. Sélection des objets (Id) à mettre à jour ;
5. Enregistrement de la valeur actualisée (V) pour les objets (Id) sélectionnés en -4-.

7. Procédé selon l'une au moins des revendications précédentes **caractérisé en ce que** les objets sont des objets commercialisés et évolutifs et **en ce que** le procédé comprend un processus de création et recherche de la généalogie des objets repérés par leur identifiant (Id), ledit processus consistant à :
1. rechercher les identifiants (Idₓ), de préférence dans le registre Ri, d'objets qui sont répertoriés dans la base de données (2) et qui ne sont plus commercialisés ;
2. rechercher pour chaque identifiant (Idₓ) retrouvé en -1- un éventuel identifiant-remplaçant (Idr) ;
3. reconstituer les généalogies des différentes générations d'identifiants (Idₓ) et d'identifiants-remplaçants (Idr), chaque généalogie aboutissant à un identifiant-remplaçant (Idrd) de dernière génération ;
4. éventuel contrôle de chaque généalogie ;
5. recherche et saisie manuelle de la valeur associée à chaque (Idrd) ;
6. affectation de la valeur (Vdg) associée à chaque (Idrd) aux identifiants (Idₓ) des générations parentes de chaque généalogie ;
7. transfert de cette valeur (Vdg) aux objets dont les identifiants sont des identifiants (Idₓ) et qui sont inventoriés dans la base de données (2).

8. Procédé selon l'une au moins des revendications précédentes **caractérisé en ce que** la base de données (2) comporte un guichet (front office) et un arrière-guichet (back office), le guichet étant accessible aux utilisateurs et permettant, conformément à l'étape (c), aux utilisateurs de consulter, de mettre à jour et d'extraire, au moins une partie des données relatives à un ou plusieurs inventaires avec leurs valorisations actualisés d'objets, un tel accès étant soumis à une autorisation d'un (ou des) administrateur(s) ;
l'arrière-guichet étant accessible aux administrateurs notamment pour les échanges de données.

9. Procédé selon la revendication 8 **caractérisé en ce que** l'étape (c) d'actualisation des données consiste essentiellement à mettre à jour les inventaires d'objets répertoriés dans la base de données, cette mise à jour pouvant être effectuée par les utilisateurs par l'intermédiaire du guichet et/ou par les administrateurs par l'intermédiaire de l'arrière-guichet.

10. Procédé selon l'une au moins des revendications 2 à 9 **caractérisé en ce que** les objets sont des machines industrielles.

11. Procédé selon la revendication 10 **caractérisé en ce que** les fiches-objets de la base de données (2) et l'interface (5.2.1) du module de saisie (5.2) comprennent :
■ des Champ de saisie (C1) choisis dans le groupe comprenant et, de préférence, constitué par : Dénomination ; Numéro de série ; Référence interne ; Commentaires ;
■ des Champ de saisie (C2) choisis dans le groupe comprenant et, de préférence, constitué par : Famille ; Fabricant ; Implantation ;
■ des Champ de saisie (C3) Identifiant (C3i) correspondant au type de la machine.

12. Procédé selon l'une au moins des revendications précédentes **caractérisé en ce que** les utilisateurs exploitent ce procédé :
■ dans le domaine de l'assurance notamment pour déclarer la valeur de ses biens à leurs assureurs et/ou pour faire un état de perte en cas de sinistre ;
■ et/ou dans le domaine de la comptabilité pour mettre à disposition les valeurs à neuf des objets constituant des immobilisations comptables.

13. Procédé selon la revendication 10 **caractérisé en ce qu'**il est prévu une étape (a.iii) d'acquisition de données sur les structures desdites machines objets, **en ce que** cette étape (a.iii) comporte l'inventaire des machines sur site et la décomposition technique des machines en sous ensembles, de préférence en sous ensembles pneumatiques, mécaniques, et hydrauliques ;
**en ce que** la mise à jour par les utilisateurs et/ou les administrateurs dans le cadre de l'étape (c) consiste à saisir les événements liés aux machines tels que les opérations d'entretien et les pannes ainsi que les données attachées à ces événements, de préférence le temps d'intervention, le coût d'intervention, les pièces changées ;
et **en ce que** les utilisateurs exploitent ce procédé en Gestion de Maintenance Assistée par Ordinateur (GMAO), notamment pour calculer la vétusté des objets.

14. Procédé selon l'une au moins des revendications 1 à 9 **caractérisé en ce que** les objets sont des oeuvres d'art et **en ce que** les utilisateurs exploitent ce procédé :
- dans le domaine de l'assurance notamment pour déclarer la valeur de ses biens à son assureur et/ou pour faire un état de perte en cas de sinistre ;
- et/ou dans le domaine de l'expertise d'art pour réaliser une évaluation financière des objets.

15. Système d'inventaire et de valorisation actualisés d'objets choisis dans le groupe comprenant, de préférence constitué par : les équipements industriels, les oeuvres d'art....; notamment pour la mise en oeuvre du procédé selon l'une au moins des revendications 1 à 14,
**caractérisé en ce qu'**il comprend :
1. un serveur informatique ;
2. une base de données (2) comprise dans le serveur (1) ;
3. un réseau informatique, de préférence internet, connecté au serveur (1) par l'intermédiaire d'un système hypertexte, de préférence le www ;
4. une pluralité de terminaux permettant à des utilisateurs d'accéder à la base de données (2) ;
5. des moyens d'acquisition de données sur les objets et sur leurs valeurs (V) réelles et individualisées et éventuellement sur leurs structures ;
6. des moyens d'enregistrement sur la base de données (2) des données acquises et comparées ;
7. de préférence des moyens de mutualisation des valeurs (V) ;
8. de préférence des moyens de recherche de la généalogie des objets et d'actualisation subséquente de leurs valeurs(V).
